# EUROPÄISCHE PATENTANMELDUNG

(11) **EP 3 871 932 A1**
(43) Veröffentlichungstag der Anmeldung: **01.09.2021**
(21) Anmeldenummer: 20465512.0
(22) Anmeldetag: 28.02.2020
(51) Int. Cl.: B60T 11/16

(54) **BREMSGERÄT FÜR EINE HYDRAULISCHE KRAFTFAHRZEUGBREMSANLAGE**

(71) Anmelder: Continental Teves AG & Co. OHG, 60488 Frankfurt am Main (DE)
(72) Erfinder: Dumitrache, Bogdan-Eugen, 60488 Frankfurt am Main (DE); Loghin, Constantin, 60488 Frankfurt am Main (DE)

(57) **Zusammenfassung**

Die Erfindung betrifft ein Bremsgerät (1) für eine Fahrzeugbremsanlage, mit einem Gehäuse (2), welches wenigstens eine Zylinderbohrung (3) mit einer Zylinderbohrungsachse (Z) aufweist, mit einem Kolben (4), welcher in der Zylinderbohrung (3) verschiebbar gelagert ist und darin eine Druckkammer (5) begrenzt, wobei der Kolben (4) durch ein Betätigungsglied (6) betätigbar ist. Um die Herstellung von Bremsgerätvarianten mit mehreren unterschiedlichen Kolbendurchmessern kostengünstiger und effizienter zu gestalten wird erfindungsgemäß vorgeschlagen, dass wenigstens ein Führungsstift (7) zur Verdrehsicherung des Kolbens (4) um die vorgesehen ist, welches an den Kolben (4) gekoppelt sowie achsparallel beabstandet zur Zylinderbohrungsachse (Z) angeordnet ist und in Umfangsrichtung an wenigstens einer gehäusefesten Stützfläche (11) abstützbar ist

## Beschreibung

Die Erfindung betrifft ein Bremsgerät für eine hydraulische Fahrzeugbremsanlage, insbesondere eine Kraftfahrzeugbremsanlage, nach dem Oberbegriff des Anspruchs 1.

Es sind vielfach Bremsgeräte mit einem Hauptzylinder bekannt, bei denen ein Kolben in einer Zylinderbohrung verschoben wird, um in einem Betriebszustand auf eine Druckkammer einzuwirken, weiche mit einem hydraulischen Druckmittel befüllt ist. Dabei ist es bekannt und erforderlich, je nach Bremsgerättyp zumindest bestimmte diskrete Positionen des Kolbens oder seine Bewegung kontinuierlich zu erfassen um diese Information für vielfältige andere Prozesse zu verwenden - beispielsweise Aktivierung eines Bremslichtschalters Ansteuerung eines Bremsgerätantriebs, Modulation von Bremsdruck in einzelnen hydraulischen Kreisen, Funktionskontrolle und vieles mehr.

Zu Erfassung der Lage und/oder Bewegung des Kolbens ist es bekannt, in dem Kolben ein meist magnetisches Geberelement aufzunehmen, welcher die Lage des Kolbens repräsentiert. Eine sehr verbreitete, herstelltechnisch besonders einfache und kostengünstige Lösung stellt dabei ein ring- oder scheibenförmiger Magnet dar, welcher in eine Innenbohrung des Kolbens koaxial zur Kolbenachse eingesetzt wird. Die Position des Geberelements wird von einem Sensorelement erfasst, welches in einem definierten Abstand vom Geberelement in oder an dem Gehäuse des Bremsgeräts außerhalb der Zylinderbohrung angeordnetes angeordnet ist.

Man bemüht sich, Dimensionen und Eigenschaften des Bremsgeräts optimal an die spezifischen Anforderungen des jeweiligen Fahrzeugs und der verwendeten Bremsanlage anzupassen. Bei unterschiedlichen Bremsanlagen benötigen im Bremsbetrieb unterschiedliche Arbeitsvolumina des hydraulischen Druckmittels um beispielsweise unterschiedlich groß dimensionierten Bremssättel zu betätigen. Daher ist es bekannt, Varianten von Bremsgeräten mit unterschiedlichen Durchmessern von Zylinderbohrungen respektive Kolben auszuführen, um beim gleichen Kolbenhub unterschiedlichen Arbeitsvolumina verdrängen zu können. So ist es beispielsweise bekannt, mehrere Varianten von einem Bremsgerät mit Kolbendurchmessern zwischen Ø19mm bis zu Ø28mm oder sogar mehr herzustellen. Bei Verwendung eines größeren Kolbens würde sich jedoch der Abstand zwischen der Achse des Magneten und dem Sensorelement ebenfalls vergrößern und die korrekte Erfassung beeinträchtigen. Um dieses Problem zu lösen ist es bekannt, für Kolbenvarianten mit verschiedenen Durchmessern jeweils gesondert angepasste Geberelemente benötigt werden. Diese führt zu einem erhöhten Herstellaufwand, Werkzeug- und Logistikkosten.

Um solche Kosten zu reduzieren ist es bekannt, das Geberelement für den größten Kolbendurchmesser auszulegen und auch bei den kleineren Kolben einzusetzen. Ein derartiges Geberelement wird zwar auf jeden Fall von dem Sensorelement erfasst, bleibt jedoch überdimensionier. Dies führt jedoch zu einem unnötig erhöhten Materialverbrauch und einem zusätzlichen Kalibrierungsaufwand, wodurch ebenfalls Kosten erhöht werden.

Es stellt sich somit eine Aufgabe, eine verbesserte Lösung für Bremsgeräte mit mehreren unterschiedlichen Kolbendurchmessern vorzuschlagen, welche die vorgenannten Nachteile vermeidet und bei einem reduzierten Materialverbrauch eine zuverlässige Erfassung des Geberelements ermöglicht.

Die Aufgabe wird erfindungsgemäß durch ein Bremsgerät mit der Merkmalskombination nach Anspruch 1 gelöst. Unteransprüche geben weitere vorteilhafte Ausführungen und Weiterbildungen der Erfindung an.

Die Erfindung sieht im Wesentlichen vor, dass mit dem Kolben ein oder mehrere Führungsstifte gekoppelt werden, welche bei Betätigung des Kolbens an einem gehäusefest angebrachten Flansch abgleiten, sich in Umfangsrichtung daran abstützen und somit eine Drehung des Kolbens um seine Mittelachse verhindern.

Dadurch kann das Geberelement radial in Richtung Sensorelement versetzt angeordnet werden kann. Die Größe des Geberelements kann reduziert werden, ein standardisiertes Element kann zudem für mehrere Kolbengrößen eingesetzt werden. Kosten für Werkstoff, Erstellung Montage und Logistik werden reduziert Weitere Merkmale und Vorteile der Erfindung ergeben sich aus der nachfolgenden Beschreibung von mehreren Ausführungsbeispielen. Nachstehend zeigten:
Fig.1 ein gattungsgemäßes Bremsgerät nach dem Stand der Technik.
Fig.2 vereinfachte vergrößerte Darstellung des Hauptzylinders gemäß Fig.1 in Längs- und Querschnitt.
Fig.3 vereinfachte Darstellung einer ersten verbesserten Ausführung des Hauptzylinders in Längs- und Querschnitt.
Fig.4 vereinfachte Darstellung einer zweiten verbesserten Ausführung des Hauptzylinders in Längs- und Querschnitt.
Fig.5 ein Ausführungsbeispiel eines Bremsgeräts im Bereich des Hauptzylinders gemäß Ausführungsform nach Fig.4 in Längsschnitt.

Fig.1

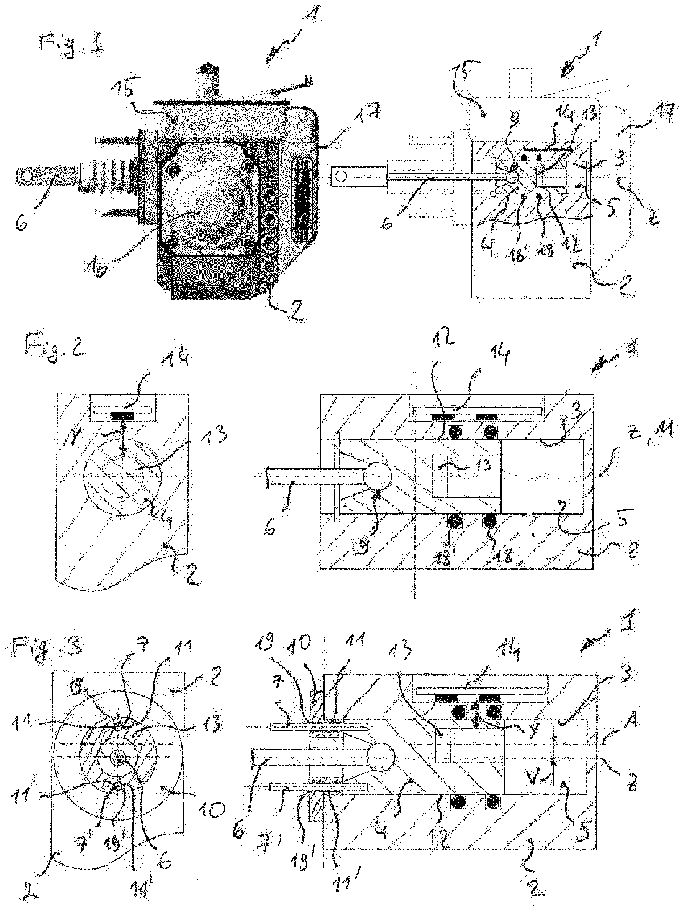

Fig.1 zeigt ein bekanntes gattungsgemäßes Bremsgerät 1 am Beispiel eines fremdangetriebenen kombinierten Aggregats zur Erzeugung und Modulation von Bremsdruck.

Das Bremsgerät 1 verfügt über ein Gehäuse 2 mit einer hier nicht explizit dargestellten Ventilanordnung und einem Hauptzylinder. Der Hauptzylinder weist eine entlang einer Zylinderbohrungsachse Z getriebene Zylinderbohrung 3, in welcher ein Kolben 4 verschiebbar gelagert und durch ein Betätigungsglied 6 betätigt wird. Das Betätigungsglied 6 ist an ein hier nicht gezeigtes Bremspedal gekoppelt, wobei innerhalb der Erfindung auch andere, beispielsweise elektromechanische Betätigungsarten ebenfalls zulässig sind.

Der Kolben 4 begrenzt in der Zylinderbohrung 3 eine mit einem hydraulischen Druckmittel gefüllte Druckkammer 5. Bei dem hier dargestellten Bremsgerät 1 ist die Druckkammer 5 in einem regulären Bremsbetrieb auf eine hier nicht explizit dargestellte Simulatoreinheit aufgeschaltet. Bei einem irregulären Bremsbetrieb, in einer sogenannten Rückfallebene, kann die Druckkammer 5 stattdessen auf die hier ebenfalls nicht dargestellten Radbremsen aufgeschaltet werden und dient so unmittelbar zum Erzeugen von Bremsdruck.

Das dargestellte Bremsgerät 1 verfügt über eine Hauptzylindereinheit mit einem einzelnen Kolben 4. Die Erfindung erstreckt sich jedoch ebenso auf weitere Ausführungen mit mehreren Kolben, beispielsweise mit Tandem-Hauptzylindern.

Auf den jeweils gegenüberliegenden Seiten vom Gehäuse 2 befinden sich eine elektromotorische Antriebseinheit 16, welche zum Aufbau des erforderlichen Bremsdrucks in einem regulären Bremsbetrieb verwendet wird und eine elektronische Steuereinheit 17 zum Ansteuern von Komponenten des Bremsgeräts 1.

Ein Druckmittelbehälter 17 dient zur Versorgung des Bremsgeräts 1 mit einem hydraulischen Druckmittel.

Fig.2
Zur Erläuterung spezifischer mit dem bekannten Stand der Technik eihergehenden Nachteile zeigt die Fig.2 vereinfacht die bekannte Ausführungsform des Hauptzylinders gemäß Fig.1.

Aus einem hier nicht gezeigten Bremspedal wird die Betätigungskraft über ein Betätigungsglied 6 in den Kolben 4 eingeleitet. Hierfür verfügt der Kolben 4 über eine Schnittstelle 9, in welcher das kolbenseitige Ende des Betätigungsglieds 6 befestigt oder zumindest abgestützt ist.

Der Kolben 4 leitet die Betätigungskraft an das Druckmittel in der Druckkammer 5 weiter. Zwei Dichtelemente 18, 18' gleiten bei Betätigung des Kolbens 4 hydraulisch abdichtend an der zylindrischen Mantelfläche 12 des Kolbens 4 ab und ermöglichen dadurch einen Druckaufbau in der Druckkammer 5.

Ein aus einem Magnetwerkstoff hergestelltes scheibenförmiges Geberelement 13 ist in dem Kolben 4 angeordnet. Bei einer Bewegung des Kolbens 4 erregt ein durch das Geberelement 13 erzeugtes Magnetfeld ein Sensorelement 14, welches in einem definierten Radialabstand zur Zylinderbohrung 3 in dem Gehäuse 2 angeordnet ist. Damit das System dauerhaft korrekten funktioniert, muss der resultierende Abstand y zwischen dem Geberelement 13 und dem Sensorelement 14 stets innerhalb enger Toleranzen gehalten werden.

Der Kolben 4 ist einteilig und rotationssymmetrisch gestaltet, die Mittelachs A des Geberelements 13 ist identisch mit der Mittelachse des Kolbens 4, welche im Wesentlichen der Zylinderbohrungsachse Z entspricht, wenn man die geringen Lagetoleranzen aufgrund der Elastizität von Dichtelementen 18, 18' außer Acht lässt. Aufgrund seiner rotationssymmetrischen Gestalt kann sich der Kolben 4 im Betrieb willkürlich um die Zylinderbohrungsachse Z drehen. Um stets ein korrektes Magnetfeld für jeden Drehwinkel des Kolbens 4 innerhalb der Zylinderbohrung 3 zu gewährleisten, muss das Geberelement 13 daher nicht nur eine bestimmte Mindestgröße haben, sondern konzentrisch zur Zylinderbohrungsachse Z aufgebaut und angeordnet sein - beispielsweise scheibenförmig oder ringförmig.

Fig.3
Fig.3 seigt eine erste erfindungsgemäße Ausführungsform des Hauptzylinders des Bremsgeräts 1.

betätigungsseitig sind in dem Kolben 42 gesonderte Führungsstifte 7, 7' fest verankert. Die Führungsstifte 7, 7' sind in radialer Richtung zueinander beabstandet sowie achsparallel zu der Kolbenachse bzw. der Zylinder Bohrungsachse Z ausgerichtet.

Des Weiteren ist an dem Gehäuse 2 betätigungsseitig ein gesonderter Führungsflansch 10 verdrehfest angebracht. In der gezeigten Ausführungsform befinden sich in dem Führungsflansch 10 zwei axiale Durchbrüche 19, 19'. Die beiden Durchbrüche 19, 19' sind als Bohrungen, fluchtend zu den Führungsstiften 7, 7' ausgebildet.

Die Führungsstifte 7, 7' durchgreifen die Durchbrüche 19, 19' und stützen sich an deren inneren Mantelfläche in Umfangsrichtung ab. Die innere Mantelflächen der beiden Durchbrüche 19, 19' dient für die Führungsstifte 7, 7' in Umfangsrichtung somit als Stützfläche 11, 11'. Durch die vorstehend beschriebene Abstützung der Führungsstifte 7, 7' in Umfangsrichtung wird eine Verdrehung des Kolbens 4 um die Zylinderbohrungsachse Z verhindert, die Führungsstifte 7, 7' dienen so als eine Verdrehsicherung des Kolbens 4.

Weil der Kolben 4 nun gegenüber dem Sensorelement 14 stets in einer eindeutigen diskreten Umfangsposition beziehungsweise Drehwinkel bezüglich der Zylinderbohrungsachse Z betätigt wird, kann das Geberelement 13 innerhalb des Kolbens 4 radial in Richtung Sensorelement 14 um einen Versatz V versetzt und somit möglichst nahe des Sensorelements 14 angeordnet werden. Dadurch kann das Geberelement 13 ohne Funktionsverlust insgesamt kleiner dimensioniert werden. Für verschiedene Durchmesser des Kolbens 4 kann derselbe Geberelement 13 verwendet werden, indem der Versatz V jeweils so gewählt wird, dass der Abstand y zum Sensorelement 14 unabhängig vom Kolbendurchmesser konstant bleibt.

Fig.4

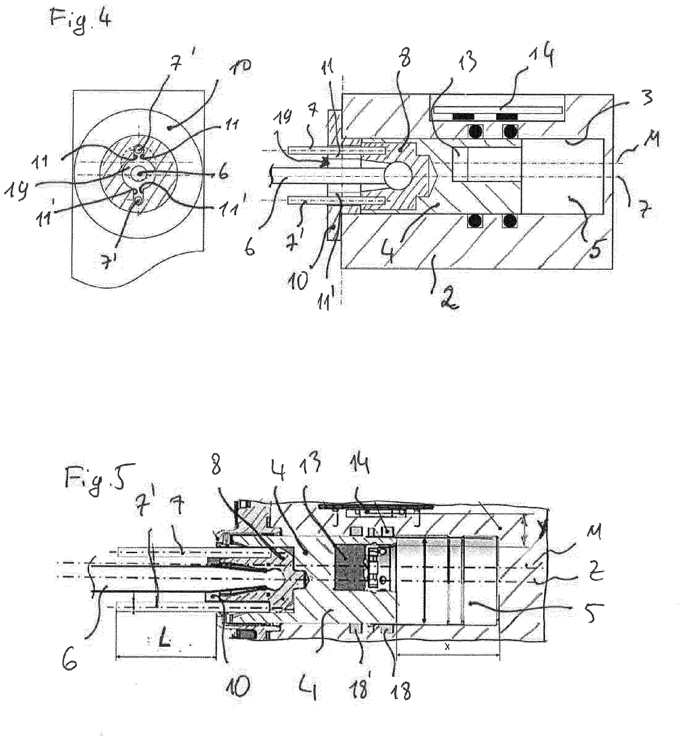

In der Fig.4 ist eine weitere Ausführungsform des Hauptzylinders eines Bremsgeräts 1 dargestellt.

Im Unterschied zu der vorstehend beschriebenen Ausführung, ist das Betätigungsglied 6 hier nicht mehr unmittelbar in dem Kolben 4, sondern in einem gesonderten Passstück 8 gelagert. Das Passstück 8 ist seinerseits drehest mit dem Kolben 4 verbunden. Die beiden Führungsstifte 7, 7' sind mit dem Passstück 8 fest verbunden.

Des Weiteren ist der Durchbruch 19 in dem Führungsflansch 10 nicht mehr als 2 diskrete Bohrungen, sondern als einzelner zusammenhängender Durchbruch gestaltet, welche im Bereich der Führungsstifte 7, 7' schlitzförmig jeweils nach radial außen gestreckt geformt ist. Als Stützflächen 11, 11' für die Führungsstifte 7, 7' dienen nun die inneren Seitenflanken der schlitzförmigen Abschnitte des Durchbruchs 19.

Eine derartige Form durch Durchbruchs 19 hat den Vorteil einer einfacheren Herstellung und Montage, erfordert jedoch eine besonders feste Verankerung von kolbenseitigen Enden der Führungsstifte 7, 7'. Die vorstehend beschriebene Ausführung mit einzelnen Bohrungen verursacht zwar einen vergleichsweise höheren Montageaufwand, ermöglicht jedoch gleichzeitig eine bessere Führung der beiden Führungsstifte 7, 7', wodurch Anforderungen an die Verankerungsfestigkeit herabgesetzt werden können.

Fig.5
Fig.5 dient zur Verdeutlichung einer möglichen Umsetzung der Ausführungsform nach Fig.4.

Grundsätzlich versteht es sich, dass die geführte Länge L der Führungsstifte 7, 7' mindestens genauso lang ist wie der maximale Hub X des Kolbens 4

### Bezugszeichen

- 1: Bremsgerät
- 2: Gehäuse
- 3: Zylinderbohrung
- 4: Kolben
- 5: Druckkammer
- 6: Betätigungsglied
- 7: Führungsstift
- 8: Passstück
- 9: Schnittstelle
- 10: Führungsflansch
- 11: Stützfläche
- 12: Mantelfläche
- 13: Geberelement
- 14: Sensorelement
- 15: Druckmittelbehälter
- 16: Antriebseinheit
- 17: Elektronische Steuereinheit
- 18: Dichtelement
- 19: Durchbruch
- A: Mittelachse des Geberelements
- L: geführte Länge
- V: Versatz
- X: Hub
- Z: Zylinderbohrungsachse
- y: Abstand zwischen Geberelement und Sensorelement

## Patentansprüche

1. Bremsgerät (1) für eine Fahrzeugbremsanlage, mit einem Gehäuse (2), welches wenigstens eine Zylinderbohrung (3) mit einer Zylinderbohrungsachse (Z) aufweist, mit einem Kolben (4), welcher in der Zylinderbohrung (3) verschiebbar gelagert ist und darin eine Druckkammer (5) begrenzt, wobei der Kolben (4) durch ein Betätigungsglied (6) betätigbar ist, **dadurch gekennzeichnet, dass** wenigstens ein Führungsstift (7) zur Verdrehsicherung des Kolbens (4) um die Zylinderbohrungsachse (Z) vorgesehen ist, welches an den Kolben (4) gekoppelt sowie achsparallel beabstandet zur Zylinderbohrungsachse (Z) angeordnet ist und in Umfangsrichtung an wenigstens einer gehäusefesten Stützfläche (11) abstützbar ist.

2. Bremsgerät (1) nach Anspruch 1 **dadurch gekennzeichnet, dass** an dem Gehäuse (2) betätigungsseitig ein gesonderter Führungsflansch (10) verdrehfest angeordnet ist und die Stützfläche (11) an dem Führungsflansch (10) ausgebildet ist.

3. Bremsgerät (1) nach Anspruch 2 **dadurch gekennzeichnet, dass** der Führungsflansch (10) wenigstens einen axialen Durchbruch (19) aufweist, welcher von dem Führungsstift (7) durchgegriffen ist, wobei eine innere Mantelfläche des Durchbruchs (19) abschnittsweise als die Stützfläche (11) fungiert.

4. Bremsgerät (1) nach Anspruch 3 **dadurch gekennzeichnet, dass** der Durchbruch (19) als eine Bohrung ausgebildet ist.

5. Bremsgerät (1) nach Anspruch 3 **dadurch gekennzeichnet, dass** der Durchbruch (19) zumindest abschnittsweise als ein radialer Schlitz ausgebildet ist

6. Bremsgerät (1) nach wenigstens einem der Ansprüche 1 bis 5 **dadurch gekennzeichnet, dass** der Führungsstift (7) unmittelbar in dem Kolben (4) verankert ist.

7. Bremsgerät (1) nach wenigstens einem der Ansprüche 1 bis 5 **dadurch gekennzeichnet, dass** das Betätigungsglied (6) in einem gesonderten Passstück (8) gelagert ist, welches drehest mit dem Kolben (4) verbunden ist und der Führungsstift (7) in dem Passstück (8) verankert ist

8. Bremsgerät (1) nach wenigstens einem der vorstehenden Ansprüche **dadurch gekennzeichnet, dass** an dem Kolben (4) wenigstens zwei separate, zueinander beabstandet sowie achsparallel angeordnete Führungsstifte (7, 7') gekoppelt sind.

9. Bremsgerät (1) nach wenigstens einem der vorstehenden Ansprüche **dadurch gekennzeichnet, dass** in dem Kolben (4) ein Geberelement (13) zur Erfassung von wenigstens einer Position des Kolbens (4) durch ein außerhalb der Zylinderbohrung (3) angeordnetes Sensorelement (14) positioniert ist.

10. Bremsgerät (1) nach Anspruch 9 **dadurch gekennzeichnet, dass** das Geberelement (13) in Bezug zur Zylinderbohrungsachse (Z) radial derart in Richtung Sensorelement (14) versetzt angeordnet ist, dass ein Radialabstand zwischen dem Geberelement (13) und der Mantelfläche (12) des Kolbens (4) in einem dem Sensorelement (13) zugewandten Abschnitt der Mantelfläche (12) am geringsten ist.
